# EUROPÄISCHE PATENTSCHRIFT

(11) **EP 1 901 676 B1**
(45) Veröffentlichungstag und Bekanntmachung des Hinweises auf die Patenterteilung: **27.11.2013**
(21) Anmeldenummer: 06754370.2
(22) Anmeldetag: 14.06.2006
(51) Int. Cl.: A61C 13/20, A61C 5/10

(54) **VERFAHREN UND MATERIALSATZ ZUM HERSTELLEN VON ZAHNERSATZTEILEN**
METHOD AND MATERIAL KIT FOR THE PRODUCTION OF TOOTH REPLACEMENT PARTS
PROCÉDÉ ET ENSEMBLE DE SUBSTANCES POUR LA FABRICATION DE PROTHÈSES DENTAIRES

(30) Priorität: 08.07.2005 DE 102005032044
(43) Veröffentlichungstag der Anmeldung: 26.03.2008
(73) Patentinhaber: Mühlbauer Technology GmbH, 22547 Hamburg (DE)
(72) Erfinder: DETJE, Bernd, 22761 Hamburg (DE); HÖHNK, Hans-Dieter, 21465 Reinbek (DE); MÜHLBAUER, Wolfgang, Carl, Friedrich, 22609 Hamburg (DE)
(74) Vertreter: Glawe, Delfs, Moll
(86) Internationale Anmeldenummer: PCT/EP2006/005736
(87) Internationale Veröffentlichungsnummer: WO 2007/006386

(56) Entgegenhaltungen:
- WO-A-98/35630
- DE-A1- 2 646 364
- US-A- 5 911 580
- US-A- 5 971 760

## Beschreibung

Die Erfindung betrifft ein Verfahren und einen Materialsatz zum Herstellen von Zahnersatzteilen.

Bekannt sind verschiedene Verfahren zur Herstellung von festsitzendem Zahnersatz zur künstlichen Neubesetzung oder zur Wiederherstellung verlorengegangener oder stark beschädigter Zähne, sowie für kosmetisch-ästhetische Korrekturen. Allen ist gemeinsam, dass sie in aufwendigen Verfahren durch speziell ausgebildete Personen hergestellt werden müssen, was in der Regel mehrere Tage benötigt und der gefertigte Zahnersatz erst dann in das orale System des Patienten eingegliedert werden kann.

Des weiteren wird bei dem überwiegenden Teil dieser Verfahren ein Modell von Ober- und Unterkiefer benötigt, welche in einen mechanischen Bewegungssimulator (Artikulator) präzise eingesetzt werden müssen, um wichtige Kontaktbeziehungen zwischen dem Zahnersatz und der Restbezahnung wiederherzustellen. Das Modell wird auch benötigt, um den Übergang zwischen präpariertem Zahn und Krone, Brücke, Inlay oder Veneer präzise realisieren zu können.

Zur Beschaffung dieser Modelle führt der Zahnarzt nach erfolgter Präparation der zu behandelnden Zähne eine sog. Abformung beider Kiefer durch (Negativform), welche dann von anderen Personen (Zahntechnikern) durch Ausgießen mit Gips oder Kunststoff in ein Arbeitsmodell (Positivform) umgesetzt wird. Bekannt sind auch Modellwerkstoffe aus speziellen Silikonverbindungen wie z.B. in der US 5,911,580 beschrieben. Bekannt sind auch Verfahren, bei denen das Gips- oder Kunststoffmodell durch digitale Modelle ersetzt ist, die durch Vermessen der oralen Situation mittels Laser- oder Scannerlicht geschaffen werden. WO 98/35630 wird als nächstliegender Stand der Technik betrachtet und offenbart den Oberbegriff des Anspruchs 1.

Die Aufgabe der Erfindung besteht in der Schaffung eines Verfahrens zum Herstellen von Zahnersatzteilen, mit dem die Herstellung der Zahnersatzteile wesentlich einfacher ist. Die Tätigkeit des Zahntechnikers soll dadurch sehr erleichtert werden.

Die erfindungsgemäße Lösung besteht darin, dass in eine erste Abformung eines Teils des menschlichen Gebisses erhärtbares Zahnersatzmaterial eingegeben wird, in dieses Material ein aus einer zweiten Abformung hergestelltes Positivmodel hineingedrückt wird und das nach dem Hineindrücken übrig gebliebene Zahnersatzmaterial zum Bilden des/der Zahnersatzteile erhärten gelassen wird.

Der Zahntechniker braucht also nur noch die vom Zahnarzt hergestellten beiden Abformungen verwenden, um ohne weitere wesentliche Bearbeitung die Zahnersatzteile herzustellen.

Als erste Abformung wird dabei die Abformung eines menschlichen Gebisses verwendet, in dem fehlende Zahnsubstanz ergänzt ist. Der Zahnarzt kann also provisorisch das Gebiss so ergänzen, wie es nach der Behandlung sein soll. Hiervon nimmt er dann die erste Abformung. Diese provisorischen Teile werden anschließend entfernt, und das Gebiss oder die Gebissteile werden für die Aufnahme der Zahnersatzteile in der üblichen Weise präpariert. Hiervon wird dann die zweite Abformung genommen.

Diese beiden Abformungen werden dem Zahntechniker übergeben, der dann auf einfache Weise wie beschrieben die Zahnersatzteile herstellen kann.

Es ist nicht einmal nötig, dass dies ein Zahntechniker durchführt. Der Zahnarzt könnte dies auch selber machen. In diesem Falle besteht durch das Verfahren der Erfindung die Möglichkeit, in nur einer Sitzung schnell und kostengünstig den Zahnersatz herzustellen und an den Zähnen anzubringen.

Vorteilhafterweise wird das Positivmodell vor dem Hineindrücken in das Zahnersatzmaterial bearbeitet, was insbesondere durch Schneiden oder Fräsen erfolgen kann. Hierdurch kann z. B. die Präparationsgrenze freigelegt werden. Dieses Freilegen der Präparationsgrenze ist im Falle der Kronenversorgung entscheidend für die exakte Randgestaltung.

Weiter ist es zweckmäßig, wenn das Zahnersatzteil nach dem Aushärten bearbeitet wird, was durch Schleifen oder Fräsen erfolgen kann. Auf diese Weise können z. B. Grate entfernt werden, die beim Hineindrücken des Positivmodells und dem anschließenden Erhärten stehengeblieben sind.

Ein Materialsatz zum Durchführen des Verfahrens zeichnet sich dadurch aus, dass er die folgenden Materialien enthält:
a) einen Werkstoff zur provisorischen Wiederherstellung verlorener Zahnsubstanz,
b) einen erhärtbaren, fließfähigen Werkstoff zur Herstellung eines Positivmodells,
c) einen erhärtbaren, fließfähigen Werkstoff zur Herstellung des Zahnersatzes.

Der Werkstoff zur provisorischen Wiederherstellung verlorener Zahnsubstanz ist zweckmäßigerweise erhärtbar und nach dem Erhärten mit rotierenden Instrumenten bearbeitbar. Der Werkstoff kann daher zur vorläufigen Zahnrekonstruktion einfach auf den Zahn aufgebracht, durch Modellieren in seine ungefähre Form gebracht werden und nach dem Erhärten mit rotierenden Instrumenten in die endgültige Form gebracht werden.

Zweckmäßigerweise ist der Werkstoff b) ein Hartsilikon, das eine Shore-A-Härte von mindestens 55, vorzugsweise von 80 bis 95, bzw. eine Shore-D-Härte von mindestens 35 bis 45 hat.

Der Werkstoff c), aus dem der Zahnersatz hergestellt ist, sollte nach dem Erhärten dauerhaft widerstandsfähig sein gegen Einflüsse des oralen Milieus und eine nur geringe Polymerisationsschrumpfung aufweisen.

Zweckmäßigerweise weist der Materialsatz einen Abformwerkstoff zum Abformen des um die fehlende Zahnsubstanz ergänzten rekonstruierten Gebissteiles sowie des für die Anbringung des Zahnersatzes präparierten Gebissteils auf.

Weiter weist er vorzugsweise ein Trennmittel auf, um die Entfernung des Positivmodells aus der zweiten Abformung zu erleichtern.

Schließlich weist der Materialsatz vorteilhafterweise Klebemittel zum Befestigen der die fehlende Zahnsubstanz provisorisch ergänzenden Teile auf.

Durch das erfindungsgemäße Verfahren und den erfindungsgemäßen Materialsatz wird also nicht nur die Arbeit des Zahntechnikers erleichtert, sondern auch diejenige des Zahnarztes, dem die Abformung wesentlich erleichtert wird. Der Zahnarzt kann sogar ganz auf die Dienste seines Zahntechnikers verzichten, wenn er das erfindungsgemäße Verfahren anwendet. Für den Patienten bedeutet das Verfahren den Vorteil, dass er in diesem Fall in einer Sitzung den Zahnersatz erhalten kann.

In einem ersten Schritt wird also bei dem Verfahren die verlorene Zahnhartsubstanz wiederhergestellt durch ein Aufbaumaterial, das vorzugsweise ein erhärtender Werkstoff ist, der mit rotierenden Instrumenten bearbeitet werden kann. Vorzugsweise ist dieser Werkstoff ein Komposit oder ein Kunststoff.

Das Positivmodel wird durch einen erhärtbaren fließbaren Werkstoff gebildet, der vorzugsweise ein Hartsilikon ist, welches durch Beschneiden bearbeitet werden kann. Das Silikon für das Positivmodell sollte nach dem Erhärten eine Shore-A-Härte von mindestens 55, vorzugsweise 80 bis 95 aufweisen, während die nach ISO 868-1985 bestimmte Shore-D-Härte 35 bis 45 oder noch mehr betragen sollte.

Der Werkstoff zur Herstellung des Zahnersatzes muss ein erhärtender fließfähiger Werkstoff sein, der mit seinen Eigenschaften den Einflüssen des oralen Milieus dauerhaft widersteht und nur eine geringe Polymerisationsschrumpfung aufweist. Vorzugweise ist er ein Komposit oder ein Kunststoff, der in der Farbe der Zähne eingefärbt ist. Der Werkstoff sollte thermisch nachvergütbar sein. Er sollte als Komposit eine Biegefestigkeit von mindestens 120 Mpa aufweisen, vorzugsweise 140 bis 175 Mpa oder noch mehr. Die Druckfestigkeit sollte mindestens 350 Mpa betragen, vorzugsweise 400 bis 700 Mpa oder noch mehr. Die Schrumpfung sollte nicht mehr als 2,5 Vol.-% betragen, vorzugsweise höchstens 2 bis 0,1 Vol.-% oder noch weniger. Der Materialverschleiß (Abrasion) sollte nicht größer als 80 µm (200.000 Cyclen ACTA) sein, vorzugsweise zwischen 50 bis 1 µm.

Als Abformwerkstoff zur Abformung des rekonstruierten Gebisses oder Gebissteiles sowie zur Abformung des präparierten Gebisses oder Gebissteiles wird vorzugsweise ein Silikon verwendet. Ein Trennmittel, um das Positivmodell aus der Abformung entnehmen zu können, ist ebenfalls zweckmäßig. Schließlich sollte noch Klebemittel vorgesehen sein, um das Aufbaumaterial an der Zahnhartsubstanz anzubringen.

Wie erwähnt wird das erfindungsgemäße Verfahren zweckmäßigerweise durch einen Zahntechniker durchgeführt. Es ist aber auch möglich, dass der Zahnarzt selbst dieses Verfahren ohne Hilfe eines Zahntechnikers anwendet. In diesem Falle ergibt sich folgender Ablauf.

In einem ersten Arbeitsschritt wird die anatomische Zahnform wiederhergestellt. Auch verlorengegangene approximale und/oder okklusale Kontaktpunkte können wieder hergestellt werden. Auch Zahnform und/oder Zahnstellungskorrektur ist möglich. Das Verfahren kann auch zum Lückenschluss bei fehlenden Zähnen eingesetzt werden. Um die gewünschte Zahnform wiederherzustellen, wird vorzugsweise ein licht- oder selbsthärtender Kunststoff oder Komposit eingesetzt. Dieser kann mit Handinstrumenten modellierend aufgetragen bzw. nach erfolgter Applikation mit Handinstrumenten manipuliert werden. Nach erfolgter Erhärtung kann eine Feinbearbeitung mittels rotierender Instrumente durchgeführt werden und so z. B. eine exakte okklusale Kontaktbeziehung wiederherstellt werden. Der Werkstoff kann auch adhäsiv an der Zahnhartsubstanz befestigt werden, um als Aufbaufüllung für die Präparation zu dienen. Zu diesem Zweck sind auch Werkstoffe wie Zemente, Gipse, Wachse, Thermoplaste oder Silikone denkbar.

Wenn die entsprechenden Maßnahmen zur provisorischen Rekonstruktion der Zahnform bzw. Gebissform abgeschlossen sind, folgt eine erste Abformung mittels gängiger Abformtechniken und Abformwerkstoffe. Anschließend werden dann der/die zu versorgenden Zahn/Zähne präpariert. Dies erfolgt nach den gängigen Regeln zur Aufnahme von Zahnersatzteilen.

Sind diese Maßnahmen zur Präparation abgeschlossen, erfolgt eine Abformung der jetzt präparierten Zähne (zweite Abformung) mittels gängiger Abformtechniken und mit entsprechenden Abformwerkstoffen.

Die zweite Abformung wird mit einem fließfähigen, erhärtbaren Werkstoff, vorzugsweise einem Silikon ausgegossen. Nach erfolgter Erhärtung des Silikons wird das gewonnene Positivmodell der zweiten Abformung entnommen. Um eine Anbindung des Materials des Positivmodells an das Abformmaterial zu vermeiden, kann der Einsatz eines Trennmittels nötig sein. Das so geschaffene Positivmodell kann noch, falls dies notwendig ist durch Schneiden oder Fräsen bearbeitet werden, um z. B. die Präparationsgrenze freizulegen. Für die Herstellung dieses Positivmodells sind auch Werkstoffe wie Zemente, Gipse, Kunststoffe oder Thermoplaste denkbar.

In die erste Abformung wird das fließfähige, erhärtbare Zahnersatzmaterial eingegeben. In die befüllte Abformung wird dann formschlüssig das Positivmodell auf- bzw. eingesetzt. Es empfiehlt sich dabei, die erste Abformung vor der Befüllung mit dem Zahnersatzmaterial von allen störenden Überschüssen zu befreien. Anschließend wird die Erhärtung des Zahnersatzmaterials abgewartet.

Nach erfolgter Erhärtung des Zahnersatzmaterials wird die erste Abformung von dem Modell getrennt und der geformte Rohling aus der ersten Abformung entnommen oder vom Positivmodell abgenommen. Der Rohling entspricht in seiner Form und Größe der rekonstruierten Zahnsituation. Um die physikalischen Eigenschaften des Rohlings zu verbessern, kann dieser thermisch nachvergütet werden.

Der Rohling wird von evtl. Materialüberschüssen befreit und mit rotierenden Instrumenten solange bearbeitet, bis auf dem Positivmodell ein befriedigender Randschluss erreicht wird. Es können auch Formkorrekturen vorgenommen werden. Wenn gewünscht, kann man Farbkorrekturen mittels härtender

Farbpasten vornehmen. Anschließend wird der Zahnersatz poliert und ohne Befestigungswerkstoff im Mund des Patienten eingesetzt. Es werden die Anpassung des Randes, der approximalen Kontaktpunkte sowie der okklusalen Kontaktpunkte kontrolliert und falls nötig durch Schleifen korrigiert. Ggf. wird noch nachpoliert. Es ist auch möglich, durch Antragen von Zahnersatzmaterial die Kontaktpunkte zu erweitern. Der fertige Zahnersatz wird dann mit einem geeigneten Befestigungswerkstoff nach gängigen Verfahren im Munde befestigt, und es werden die okklusalen Kontaktpunkte erneut überprüft.

Die Vorteile des Verfahrens bestehen darin, dass der Zahnersatz auch in der zahnärztlichen Praxis hergestellt werden kann, ohne dass ein Zahntechniker benötigt wird, es kann während einer Behandlungssitzung hergestellt und eingesetzt werden. Der Zahnersatz kann kostengünstig und schnell wiederhergestellt werden und kann trotz geringen technischen Aufwands genügend präzise hergestellt werden. Dies gilt insbesondere für die Randgestaltung. Es sind nur wenige Werkstoffe und nur wenige Geräte notwendig.

## Patentansprüche

1. Verfahren zum Herstellen von Zahnersatzteilen, bei dem in eine erste Abformung eines Teils des menschlichen Gebisses erhärtbares Zahnersatzmaterial eingegeben wird, in dieses Material ein aus einer zweiten Abformung hergestelltes Positivmodell hineingedrückt wird, und das nach dem Hineindrücken übrig gebliebene Zahnersatzmaterial zum Bilden des/der Zahnersatzteile erhärten gelassen wird, wobei als zweite Abformung die Abformung eines menschlichen Gebisses verwendet wird, das zur Anbringung des/der Zahnersatzteile präpariert ist, **dadurch gekennzeichnet, dass** als erste Abformung die Abformung eines menschlichen Gebisses verwendet wird, in dem fehlende Zahnsubstanz ergänzt ist.

2. Verfahren nach Anspruch 1, **dadurch gekennzeichnet, dass** das Positivmodell vor dem Hineindrücken in das Zahnersatzmaterial bearbeitet wird.

3. Verfahren nach Anspruch 2, **dadurch gekennzeichnet, dass** das Positivmodell durch Schneiden oder Fräsen bearbeitet wird.

4. Verfahren nach einem der Ansprüche 1 bis 3, **dadurch gekennzeichnet, dass** das Zahnersatzteil nach dem Aushärten bearbeitet wird.

5. Verfahren nach Anspruch 4, **dadurch gekennzeichnet, dass** das Zahnersatzteil durch Schleifen oder Fräsen bearbeitet wird.

6. Materialsatz zum Durchführen des Verfahrens nach einem der Ansprüche 1 bis 5, **dadurch gekennzeichnet, dass** er die folgenden Materialien enthält:
a) einen Werkstoff zur provisorischen Wiederherstellung verlorener Zahnsubstanz,
b) einen erhärtbaren, fließfähigen Werkstoff zur Herstellung eines Positivmodells,
c) einen erhärtbaren, fließfähigen Werkstoff zur Herstellung des Zahnersatzes.

7. Materialsatz nach Anspruch 6, **dadurch gekennzeichnet, dass** der Werkstoff a) erhärtbar und nach dem Erhärten mit rotierenden Instrumenten bearbeitbar ist.

8. Materialsatz nach Anspruch 6 oder 7, **dadurch gekennzeichnet, dass** der Werkstoff b) ein Hartsilikon ist, das eine Shore-A-Härte von mindestens 55, vorzugsweise von 80 bis 95, beziehungsweise eine Shore-D-Härte von mindestens 35 bis 45 hat.

9. Materialsatz nach einem der Ansprüche 6 bis 8, **dadurch gekennzeichnet, dass** der Werkstoff c) widerstandsfähig gegen die Einflüsse des oralen Milieus ist und eine geringe Polymerisationsschrumpfung aufweist.

10. Materialsatz nach einem der Ansprüche 6 bis 9, **dadurch gekennzeichnet, dass** er einen Abformwerkstoff zum Abformen des um die fehlende Zahnsubstanz ergänzten rekonstruierten Gebissteils sowie des für die Anbringung des Zahnersatzes präparierten Gebissteils aufweist.

11. Materialsatz nach einem der Ansprüche 6 bis 10, **dadurch gekennzeichnet, dass** er ein Trennmittel zum Erleichtern der Entfernung des Positivmodells aus der zweiten Abformung aufweist.

12. Materialsatz nach einem der Ansprüche 6 bis 11, **dadurch gekennzeichnet, dass** er Klebemittel zum Befestigen der die fehlende Zahnsubstanz provisorisch ergänzenden Teile aufweist.

## Claims

1. Method for producing tooth replacement parts, in which curable tooth replacement material is introduced into a first impression of part of the human dentition, a positive model produced from a second impression is pressed into this material and the tooth replacement material remaining after the pressing-in is allowed to cure to form the tooth replacement part(s), the impression of a human dentition which has been prepared for attaching the tooth replacement part(s) being used as the second impression, **characterised in that** the impression of a human dentition in which missing tooth substance is replaced is used as the first impression.

2. Method according to claim 1, **characterised in that** the positive model is machined before pressing into the tooth replacement material.

3. Method according to claim 2, **characterised in that** the positive model is machined by cutting or milling.

4. Method according to any of claims 1 to 3, **characterised in that** the tooth replacement part is machined after curing.

5. Method according to claim 4, **characterised in that** the tooth replacement part is machined by grinding or milling.

6. Set of materials for carrying out the method according to any of claims 1 to 5, **characterised in that** it contains the following materials:
a) a material for provisionally restoring lost tooth substance,
b) a curable, fluid material for producing a positive model,
c) a curable, fluid material for producing the tooth replacement.

7. Set of materials according to claim 6, **characterised in that** the material a) is curable and can be machined by means of rotating instruments after curing.

8. Set of materials according to either claim 6 or claim 7, **characterised in that** the material b) is a hard silicone which has a Shore A hardness of at least 55, preferably of from 80 to 95, or a Shore D hardness of at least 35 to 45.

9. Set of materials according to any of claims 6 to 8, **characterised in that** the material c) is resistant to the influences of the oral environment and has low polymerisation shrinkage.

10. Set of materials according to any of claims 6 to 9, **characterised in that** it comprises a moulding material for making an impression of the reconstructed dentition part in which the missing tooth substance has been replaced and of the dentition part which has been prepared for attaching the tooth replacement.

11. Set of materials according to any of claims 6 to 10, **characterised in that** it comprises a release agent for aiding removal of the positive model from the second impression.

12. Set of materials according to any of claims 6 to 11, **characterised in that** it comprises adhesives for attaching the parts which provisionally replace the missing tooth substance.

## Revendications

1. Procédé de fabrication de prothèses dentaires, dans lequel un matériau pour prothèses dentaires durcissable est introduit dans une première empreinte d'une partie de la dentition humaine, un modèle positif fabriqué à partir d'une deuxième empreinte est enfoncé dans ce matériau, et on laisse durcir le matériau pour prothèses dentaires qui reste après l'enfoncement pour la formation du/des prothèses dentaires, l'empreinte d'une dentition humaine qui est préparée pour la mise en place du/des prothèses dentaires étant utilisée en tant que deuxième empreinte d'une dentition humaine, **caractérisé en ce que**, en tant que première empreinte, il est utilisé l'empreinte d'une dentition humaine dans laquelle la substance dentaire manquante est complétée.

2. Procédé selon la revendication 1, **caractérisé en ce que** le modèle positif est usiné avant d'être enfoncé dans le matériau pour prothèses dentaires.

3. Procédé selon la revendication 2, **caractérisé en ce que** le modèle positif est usiné par découpe ou fraisage.

4. Procédé selon une des revendications 1 à 3, **caractérisé en ce que** la prothèse dentaire est usinée après le durcissement.

5. Procédé selon la revendication 4, **caractérisé en ce que** la prothèse dentaire est usinée par meulage ou fraisage.

6. Jeu de matériaux pour la réalisation du procédé selon une des revendications 1 à 5, **caractérisé en ce qu'**il contient les matériaux suivants :
a) un matériau pour la restauration provisoire de la substance dentaire perdue,
b) un matériau fluide durcissable pour la fabrication d'un modèle positif,
c) un matériau fluide durcissable pour la fabrication de la prothèse dentaire.

7. Jeu de matériaux selon la revendication 6, **caractérisé en ce que** le matériau a) est durcissable et peut être usiné avec des instruments rotatifs après le durcissement.

8. Jeu de matériaux selon la revendication 6 ou 7, **caractérisé en ce que** le matériau b) est une silicone dure qui a une dureté Shore A d'au moins 55, de préférence de 80 à 95, ou respectivement une dureté Shore D d'au moins 35 à 45.

9. Jeu de matériaux selon une des revendications 6 à 8, **caractérisé en ce que** le matériau c) est résistant aux influences du milieu oral et présente un faible retrait de polymérisation.

10. Jeu de matériaux selon une des revendications 6 à 9, **caractérisé en ce qu'**il présente un matériau d'empreinte pour réaliser l'empreinte de la partie de dentition reconstruite complétée de la substance dentaire manquante, ainsi que de la partie de dentition préparée pour la mise en place de la prothèse dentaire.

11. Jeu de matériaux selon une des revendications 6 à 10, **caractérisé en ce qu'**il présente un agent de séparation pour faciliter l'enlèvement du modèle positif hors de la deuxième empreinte.

12. Jeu de matériaux selon une des revendications 6 à 11, **caractérisé en ce qu'**il présente des agents adhésifs pour la fixation des parties complétant provisoirement la substance dentaire manquante.
